# EUROPEAN PATENT SPECIFICATION

(11) **EP 3 086 639 B1**
(45) Date of publication and mention of the grant of the patent: **15.08.2018**
(21) Application number: 14815367.9
(22) Date of filing: 19.12.2014
(51) Int. Cl.: A01N 3/02, B65D 85/50, A01P 21/00, A01N 43/90, A01N 45/00

(54) **METHOD OF PRESERVING CUT ROSES DURING TRANSPORTATION AND STORAGE AND SHIPMENT KIT CONTAINING CUT ROSES**
VERFAHREN ZUM KONSERVIEREN VON SCHNITTROSEN WÄHREND TRANSPORT UND LAGERUNG SOWIE VERSANDKIT MIT DEN SCHNITTROSEN
PROCÉDÉ DE CONSERVATION DE ROSES COUPÉES PENDANT LE TRANSPORT ET LE STOCKAGE ET KIT D'EXPÉDITION CONTENANT LES ROSES DÉCOUPÉES

(30) Priority: 24.12.2013 EP 13199507
(43) Date of publication of application: 02.11.2016
(73) Proprietor: Enhold B.V., 1411 DD Naarden (NL)
(72) Inventor: JANSSEN, Johannes Antonius Marie, NL-1325 LC Almere (NL)
(74) Representative: Nederlandsch Octrooibureau
(86) International application number: PCT/EP2014/078644
(87) International publication number: WO 2015/097074

(56) References cited:
- WO-A2-2007/127238
- US-A- 3 112 192
- US-B1- 6 357 207
- DATABASE WPI Week 200574 Thomson Scientific, London, GB; AN 2005-717908 XP002723647, & JP 2005 281196 A (KYOTO BIOMEDICAL SCI KK) 13 October 2005 (2005-10-13) cited in the application
- DEL RIO M A ET AL: "EFFECT OF PRETREATMENT AND STORAGE CONDITIONS ON CUT ROSE FLOWERS", ACTA HORTICULTURAE, INTERNATIONAL SOCIETY FOR HORTICULTURAL SCIENCE, BE, no. 246, 1 January 1989 (1989-01-01), pages 319-326, XP009177690, ISSN: 0567-7572 cited in the application
- SABEHAT ADENAN ET AL: "GA-3 effects on postharvest alterations in cell membranes of Rose (Rosa x hybrida) petals", JOURNAL OF PLANT PHYSIOLOGY, URBAN & FISCHER, vol. 144, no. 4-5, 1 January 1994 (1994-01-01), pages 513-517, XP009177701, ISSN: 0176-1617 cited in the application
- S. Mayak ET AL: "Cytokinin Activity in Rose Petals and Its Relation to Senescence", PLANT PHYSIOLOGY, vol. 46, no. 4, 1 October 1970 (1970-10-01), pages 497-499, XP55393821, Rockville, Md, USA ISSN: 0032-0889, DOI: 10.1104/pp.46.4.497
- D K Salunkhe ET AL: "Chapter 2: Senescence of Flowers and Ornamentals - Basic Principles and Considerations" In: "Postharvest Biotechnology of Flowers and Ornamental Plants", 1 January 1990 (1990-01-01), Springer Verlag, Germany, XP55393867, ISBN: 978-3-642-73805-0 pages 13-18, DOI: 10.1007/978-3-642-73803-6,

## Description

### TECHNICAL FIELD OF THE INVENTION

The present invention provides a method of preserving cut roses during transportation and storage, especially during transportation and storage in the absence of water supply. The preservation method of the present method comprises the steps of:
- cutting roses to produce cut roses comprising a flower bud or a bloomed flower; and
- packaging the cut roses in a container without immersing or inserting the stems in a hydration system;
wherein a preservation composition containing plant hormone is applied onto the flower buds or bloomed flowers of the cut roses before or during the packaging. The plant hormone used in this method is selected from cytokinins, gibberellins and combinations thereof.

Also provided is a flower shipment kit comprising an outer container defining an inner chamber; and one or more cut roses contained within said inner chamber; wherein the flower buds or bloomed flowers of the cut roses contain added plant hormone; and wherein the stems of the cut roses are not immersed or inserted into a hydration system.

### BACKGROUND OF THE INVENTION

Cut flower production has a long and distinguished history. In the 17^{th} and 18^{th} century cut flower production became established in The Netherlands with the development of greenhouses. Spring flowers were brought into bloom early in the winter. In particular, lilac bushes were dug out of the field in the fall subjected to natural cold temperatures to break dormancy and forced in greenhouses. The cut flowers were then harvested and sold.

Cut flower production quickly spread from The Netherlands to other European countries and other continents. At the time transportation was slow and lacked refrigeration. Thus, in order to provide the populace of towns and cities with fresh cut flowers producers were usually located near these cities and towns.

The development of air transport and refrigerated trucks has greatly accelerated the concentration of the cut flower industry and allowed it to move to areas with the best climates for optimum production conditions and lower production costs.

In the past thirty years, the market for cut flowers has become a global one; flowers and cut foliage sourced from throughout the world are sold as bunches or combined into arrangements and bouquets in the major target markets, such as the EU, North America and Japan. The high export value of cut flowers has led to dramatic increases in production in many countries, such as Colombia, Ecuador, Kenia, Ethiopia and India. Production of cut flowers and foliage can be highly profitable in countries with an ideal growing environment (particularly those close to the equator where the environment is uniform throughout the year), and low labor costs. The costs of establishing production in the field or even in plastic houses are relatively modest, and harvest may start within a few months of planting. Because of this global production system and marketplace, and the high perishability of cut flowers, air transport is commonly used to dispatch cut flowers from production countries to the relevant consumer markets.

Although air transport is rapid compared to surface modes (truck, sea container, etc.), the response of cut flowers and foliage to temperature leads to their rapid deterioration even during the relatively few hours that they are in transit when transported by air. It has frequently been demonstrated that transport of flowers in surface modes that permit maintenance of the cold chain results in better out-turns than air freight under uncontrolled temperatures. This is largely a result of the dramatic response of flowers to increased temperatures. For this reason, air transport is seldom the method of choice when alternative transportation modes that offer good control of temperature are available.

The globalization of cut flower production has significantly increased the average time between harvest of a flower and its arrival in the consumer's home. Increased time in the marketing channels has significant implications for the eventual life of the flower, and places increased pressure on careful attention to the factors that affect the postharvest life of the flower.

Professionals in the floral industry have long known that temperature is an important factor affecting the postharvest life of flowers. This is why cut flowers are usually shipped in refrigerated trucks, florists use cool-rooms to hold their flowers, and consumers are advised that they place their flowers in the refrigerator or a cool place overnight to increase their vase life.

Cut flowers are transported both with and without water. Systems for holding the flowers in water during transportation and storage - so-called 'aquapacks' or Proconas™ - are in commercial use. These systems have been developed specifically to increase the longevity of cut flowers that reach consumers long after they have been harvested. However, for cost reasons transportation and storage of cut flowers without water ('dry') is clearly preferred.

Roses are a very popular category of cut flowers. Most roses sold in Europe and the USA are produced in South America or Africa. After harvesting, these roses are typically shipped to their markets under refrigerated, dry conditions. Transportation of the roses from grower to florist typically takes 2-7 days. The vase life of roses is strongly affected by both duration and conditions of transportation and storage. Especially if roses are transported and stored under dry conditions for multiple days, the vase life of the flowers may be reduced to an unsatisfactory short period of time.

US 6,357,207 describes a method for increasing the life of a floral grouping by packaging the floral grouping in a sealed package under a modified atmosphere containing an oxygen concentration ranging from 0% to about 21% by volume, a carbon dioxide concentration ranging from 0% to about 30% by volume, and the remaining concentration of the modified atmosphere being substantially molecular nitrogen.

It is known to use plant hormones in the preservation of cut flowers. US 3,112,192 describes a process for extending the life of a cut flower comprising contacting said flower with N⁶-benzyladenine. The examples of the US patent describe how the stems of flower spikes of gladiolus and carnation were immersed in a solution of N⁶-benzyladenine (10, 30 and 75 ppm). The examples show that this treatment extended the vase life of flower spikes that had previously been wilted by keeping them under dry ambient conditions for 4 hours immediately after cutting.

EP-A 1 263 286 describes floral and botanical preservative compositions containing an N-acethylethanolamine. The composition may contain a plant hormone selected from the group consisting of an auxin, a gibberellin and a cytokinin.

JP 2005/281196 describes an aqueous spraying solution containing saccharides and 6-benzyl aminopurine (6-benzyladenine). The patent examples describe how cut flowers standing in tap water were sprayed with such a spraying solution. The effect of this spraying is reduced inclination or shrinkage of the petal and prolonged freshness of the cut flowers.

Sabehat et al. (GA3 Effects on Postharvest Alterations in Cell Membranes of Rose (Rosa x Hybrida) Petals, Plant Physiol., 144, p513-517, 1994 describe an experiment in which intact flower buds of roses were sprayed with 350 mg/L (ca. 1 mM) solution of gibberellin (GA3). The authors state: "In preliminary experiments, this concentration was found to be optimal for improving rose flower vase-life when applied as a spray (data not shown)." The flower buds of the control treatment were sprayed with water and the stems of both control and treated flowers were placed with the base in a 25 mg/L solution of sodium dichlorocyanorate (SDIC). The differences in protein and electrolyte content of the petals of sprayed and non-sprayed roses was studied.

M.A. del Rio et al (Effect of pretreatment and storage conditions on cut rose flowers, Acta Horticulturae 246 (1989), 319-325 describe how cut rose flowers were sprayed or held in solution with kinetin (KI) or 6-benzylaminopurine (BA) prior to simulated home conditions. The authors conclude that "treatments containing KI or BA did not benefit on rose vase life".

WO 2007/127238 describes a flower preservation system comprising:
- one or more cut flowers comprising blossoms and stems, which stems comprise cut ends and a plurality of leaves;
- one or more sealable containers comprising a construction that defines a stem compartment, and wherein the one or more flowers are packaged with at least a portion of each of the stems in the stem compartment; and
- a cargo container holding the packaged flowers;
wherein the blossoms of the one or more flowers are outside the stem compartment and at least a portion of the leaves are inside the stem compartment.
In paragraph [0120] of the international patent application it is observed: "Plant hormones in preservative media, such as, e.g., auxins, cytokinins, and/or gibberellins, can extend the attractive shelf life of cut flowers by providing chemical messages promoting vitality and/or reducing messages that promote wilting and abscission".

### SUMMARY OF THE INVENTION

The inventors have discovered that the vase life of roses that are kept under dry conditions for several days after harvesting can be extended significantly by applying certain plant hormones onto the flower buds or bloomed flowers shortly before or after the harvesting. The plant hormones that may suitably be used in this method are cytokinins, gibberellins and combinations thereof. The plant hormone is suitably applied onto the flower buds or bloomed flowers by e.g. spraying or dipping.

Thus, one aspect of the present invention relates to a method of preserving cut roses during transportation or storage, said method comprising:
- cutting roses to produce one or more cut roses comprising a flower bud or a bloomed flower; and
- packaging one or more of the cut roses in a container without immersing or inserting the stems in a hydration system;
wherein the cut roses are treated before or during the packaging by applying a preservation composition onto the flower buds or bloomed flowers of these cut roses, said preservation composition containing at least 5 ppm of plant hormone selected from cytokinin, gibberellins and combinations thereof.

Although the inventors do not wish to be bound by theory, it is believed that after the plant hormone has been applied onto the flower buds or bloomed flowers, it is absorbed into the flower where it somehow slows down petal senescence processes, especially petal senescence process that are triggered by wilting. Wilting of cut flowers inevitably occurs when flowers are kept under dry condition without water supply. Surprisingly, it was found that by simply spraying an aqueous plant hormone solution onto the buds or flowers of cut roses shortly after harvesting, the vase life of these roses can be extended significantly, even if the flowers are put in a vase after 22 days of dry refrigerated transportation and storage.

A further aspect of the invention concerns a flower shipment kit comprising:
- an outer container defining an inner chamber; and
- one or more cut roses contained within said inner chamber;
wherein the flower buds or bloomed flowers of the one or more cut roses contain added plant hormone, said added plant hormone being selected from cytokinins, gibberellins and combinations thereof; and wherein the stems of the cut roses are not immersed or inserted into a hydration system.

### DETAILED DESCRIPTION OF THE INVENTION

The present invention provides a method of preserving cut roses during transportation or storage, said method comprising:
- cutting roses to produce one or more cut roses comprising a flower bud or a bloomed flower; and
- packaging one or more of the cut roses in a container without immersing or inserting the stems in a hydration system;
wherein the cut roses are treated before or during the packaging by applying a preservation composition onto the flower buds or bloomed flowers of these cut roses, said preservation composition containing at least 5 ppm of plant hormone selected from cytokinin, gibberellins and combinations thereof.

The term "container" as used herein should not be construed narrowly. This term encompasses, for instance, a carton box containing one or more bunches of roses. The term further encompasses, for instance, a shipping container that is filled with numerous bunches of roses.

The term "cytokinin" as used herein refers to a class of plant growth substances that promote cell division, or cytokinesis, in plant roots and shoots. There are two types of cytokinins: adenine-type cytokinins represented by kinetin, zeatin, and 6-benzylaminopurine, and phenylurea-type cytokinins like diphenylurea and thidiazuron.

The term "gibberellins" as used herein refers to plant hormones that regulate growth and influence various developmental processes. Gibberellins are tetracyclic diterpene acids. There are two classes based on the presence of either 19 or 20 carbons. The 19-carbon gibberellins, such as gibberellic acid, have lost carbon 20 and, in place, possess a five-member lactone bridge that links carbons 4 and 10. The 19-carbon forms are, in general, the biologically active forms of gibberellins.

Whenever reference is made herein to the cutting of roses, unless indicated otherwise, what is meant is the harvesting of roses by removing one or more roses from a rose shrub by cutting the stem.

It should be understood that the present method may comprise additional flower treatment steps before the packaging of the cut roses in the container. Prior to said packaging, the stems of the cut roses may suitably be immersed into an aqueous treatment solution containing, for instance, preservatives and/or nutrients. Different scenarios of the present method that include one or more of such pre-treatments (immersion of the stems of the cut roses in a treatment solution) are listed below:
a) cutting, pretreatment, packaging
b) cutting, bunching, pre-treatment, packaging
c) cutting, pre-treatment, bunching, packaging
d) cutting, pre-treatment ('greenhouse solution'), bunching, pre-treatment ('pre-treatment solution'), packaging.

In these scenarios the application of the preservation composition onto the flower buds or bloomed flowers of the cut roses may occur at any stage after the cutting.

The preservation composition employed in the present method preferably is a liquid, most preferably an aqueous liquid.

The concentration of plant hormone in the preservation composition preferably lies in the range of 8-200 ppm, more preferably in the range of 10-100 ppm and most preferably in the range of 20-80 ppm.

The preservation composition may suitably contain other components besides the plant hormone. Examples of other components that may be present in the composition include antifungal compounds like boscalid, imazalil, pyrimethanil, cyprodinil, fludioxinil, prochloraz, fenhexamid, tebuconazole and/or thiabendazole.

The preservation composition is preferably applied onto the flower buds or bloomed flowers by spraying or dipping. Application by dipping can be achieved by immersing at least a part of the cut flower, including the flower bud or bloomed flower, into a liquid preservation composition containing the plant hormone(s).

According to a particularly preferred embodiment, the preservation composition is applied by dipping the flower buds or bloomed flowers of the cut roses into a bath filled with the liquid preservation composition, preferably whilst holding the stems above the surface of the preservation composition. Typically, the flower buds or bloomed flowers are kept in the liquid preservation composition for 1-60 seconds, more preferably for 2-20 seconds and most preferably for 3-5 seconds.

Preferably the preservation composition is applied selectively to the flower buds and the bloomed flower, i.e. the leaves and stems are not (purposely) treated.

In accordance with another preferred embodiment, the treatment with a preservation composition does not include immersing the cut end of the flower stem into the preservation composition for more than 30 minutes, even more preferably for more than 10 minutes.

The roses preferably are still in the bud stage when they are treated with the preservation composition.

The time period between the cutting and the packaging of the cut roses may vary widely. If the freshly cut roses are stored under refrigerated dark conditions, packaging may be postponed by a couple of weeks. Typically, the duration of this time period between cutting and packaging does not exceed 14 days. More preferably, the cut roses are packaged within 7 days, more preferably within 1 day after the cutting.

The preservation composition is advantageously applied onto the flower buds or bloomed flowers at some stage between the cutting of the roses and the packaging of the cut roses. The preservation composition may be applied shortly after the cutting, or alternatively, it may be applied shortly before the packaging. In accordance with a preferred embodiment, the preservation composition is applied within 14 days, more preferably within 7 days and most preferably within 1 day after the cutting.

The benefits of the present invention are particularly pronounced if, following packaging, the treated roses are kept in the container for at least 1 day without water supply. Even more preferably the treated roses are kept in the container without water supply for at least 2 days, most preferably for at least 4 days.

In accordance with a particularly preferred embodiment of the present invention the packaged, treated roses are kept in the container for at least 1 day under refrigeration conditions and without water supply. Even more preferably the treated roses are kept in the container under refrigeration conditions without water supply for at least 2 days, most preferably for at least 4 days. Here the term "refrigeration conditions" refers to cooled transportation or storage at a temperature in the range of 0-10°C, preferably of 0-6°C, most preferably of 0-2°C.

Another aspect of the present invention relates to a flower shipment kit comprising:
- an outer container defining an inner chamber; and
- one or more cut roses contained within said inner chamber;
wherein the flower buds or bloomed flowers of the one or more cut roses contain added plant hormone, said added plant hormone being selected from cytokinins, gibberellins and combinations thereof; and wherein the stems of the cut roses are not immersed or inserted into a hydration system.

The buds or flowers of the one or more cut roses typically contain at least 0.5 ppm of the plant hormone. More preferably the plant hormone (cytokinins and/or gibberellins) is contained in the buds or flowers in a concentration of at least 1 ppm, even more preferably of 2-40 ppm and most preferably of 4-20 ppm.

The plant hormone employed in accordance with the present invention preferably is a cytokinin. According to one preferred embodiment, the cytokinin is an adenine-type cytokinin, most preferably 6-benzyladenine. According to another preferred embodiment the cytokinin is thidiazuron.

As explained herein before, the term container should not be construed narrowly. The inner chamber of the container typically has a volume in the range of 10 dm³ to 1,000 m³, more preferably of 20 dm³ to 1 m³ and most preferably of 40 dm³ to 200 dm³.

Preferably, the container holding the one or more cut roses is a box, more preferably a carton box.

The number of cut roses within the inner chamber can range of 1 to 500,000. Preferably, the inner chamber of the outer container holds at least 10 cut roses, even more preferably 100-400 cut roses.

In accordance with the present invention the plant hormone is preferably selectively applied onto the flower buds or bloomed flowers, meaning that more plant hormone is applied onto the buds or flowers than on, for instance, the stems. Accordingly, in a preferred embodiment, the concentration of the added plant hormone in the flower buds or bloomed flowers of the one or more cut roses is at least twice as high, more preferably at least 4 times as high and most preferably at least 5 times as high as the concentration of the added plant hormone in the stems of the one or more cut roses.

The invention is further illustrated by the following non-limiting examples.

### EXAMPLES

### Example 1

Freshly cut red roses ('Red Desire') were obtained from a greenhouse in the Netherlands. These flowers were randomly divided into three different sets .

Within 4 hours of cutting, one set of flowers (set A) was subjected to a preservation treatment that involved dipping of the flower heads into an aqueous solution of 80 ppm 6-benzylaminopurine (BA) in tap water for 3 seconds.

Immediately after the preservation treatment, each set of flowers was bunched and sleeved (6 flowers per sleeved bunch) after the ends of the flower stems had been cut off, and in total 108 flowers of each set were kept 24 hours at 2°C under dark conditions in buckets (54 stems per bucket) with the flower stems immersed in 2 liters of water containing 1 ml/l of a flower pre-treatment product (Chrysal® Grow 20).

Following this pre-treatment, the sleeved flower bunches of set A were removed from the buckets and packaged without any external water supply in a carton box (l x b x h = 1.0 x 0.4 x 0.2 m). The carton box contained 18 sleeved flower bunches.

One of the other two sets of flowers (Control) was packaged in the same way. The remaining set of flowers (Reference) was not packaged dry into a carton box, but immediately subjected to the sequence of storage and display conditions described in Table 1.

**Table 1**

| | Temperature | Light conditions | Duration |
|---|---|---|---|
| Refrigerated storage ¹ | 2°C | Dark | 4 days |
| Shop display ¹ | 20°C | Dark / 1,000 lux³ | 2 days |
| Home display ² | 20°C | Dark / 1,000 lux³ | Up to 14 days |

| | | | |
|---|---|---|---|
| ¹ 9 sleeved bunches in a bucket holding 2 liter of water; water containing 5 ml/l of Chrysal® Clear Professional 2. ² 6 flowers in a vase (without sleeve) holding 1 liter of water; vase water containing 10 g/l of Chrysal® Clear. ³ During shop and home display the flowers were alternately exposed to 12 hours of light (1,000 lux) and 12 hours of darkness. | | | |

Before the refrigerated storage and the home display the ends of the flower stems were cut off.

The packaged flowers (sleeved and in a carton box) belonging to Set A and the Control set were subjected to simulated refrigerated transport under dry, dark conditions for 14 days at 2°C before also being subjected to the sequence of storage and display conditions described in Table 1.

Before the refrigerated storage stage the BA concentrations in the flower heads were analyzed. In addition, the vase life of the flowers was assessed by an expert panel during the home display period. The results are depicted in Table 2.

**Table 2**

| | BA added | Dry transport | BA concentration in flower heads | Vase life |
|---|---|---|---|---|
| | | | (ppm) | (days) |
| Set A | Yes | Yes | 10.0 | 12.8 |
| Control | No | Yes | 0 | 11.0 |
| Reference | No | No | 0 | 12.0 |

After 11 days on the vase, the red roses of set A were found to have retained most of their original red colour. In contrast thereto, the roses of the control set showed undesirable bluing/darkening of the colour

### Example 2

Example 1 was repeated, except that this time, instead of using cut roses obtained from a Dutch green house, cut roses that had been air transported under dry conditions from Kenya to the Netherlands were used. Three different types of cut red roses were used in this study, namely 'Hot Blood', 'Rhodos' and 'Incredible'.

The results for each of these rose types are summarized in Tables 3, 4 and 5.

**Table 3**

| Hot Blood | BA added | Dry transport | BA concentration in flower heads | Vase life |
|---|---|---|---|---|
| | | | (ppm) | (days) |
| Set A | Yes | Yes | 7.2 | 13.9 |
| Control | No | Yes | 0 | 10.2 |
| Reference | No | No | 0 | 16.0 |

After 11 days on the vase, the red roses of set A were found to have retained most of their original red colour. In contrast thereto, the roses of the control set showed undesirable blueing/darkening of the colour.

**Table 4**

| Rhodos | BA added | Dry or wet transport | BA concentration in flower heads | Vase life |
|---|---|---|---|---|
| | | | (ppm) | (days) |
| Set A | Yes | Dry | 14.0 | 14.9 |
| Control | No | Dry | 0 | 11.0 |
| Reference | No | Wet | 0 | 11.0 |

After 11 days on the vase, the red roses of set A were found to have retained most of their original red colour. In contrast thereto, the roses of the control set showed undesirable blueing/darkening of the colour.

**Table 5**

| Incredible | BA added | Dry or wet transport | BA concentration in flower heads | Vase life |
|---|---|---|---|---|
| | | | (ppm) | (days) |
| Set A | Yes | Dry | 7.9 | 13.0 |
| Control | No | Dry | 0 | 10.1 |
| Reference | No | Wet | 0 | 8.0 |

After 11 days on the vase, the red roses of set A were found to have retained most of their original red colour. In contrast thereto, the roses of the control set showed undesirable blueing/darkening of the colour.

### Example 3

Example 1 was repeated, except that this time no Reference set was used, i.e. the study used two sets of flowers that were both transported without water supply ('dry'). Furthermore, the cut roses used in the study had been air transported under dry conditions from Colombia to the Netherlands. Bunches containing 4 flowers of each of three different types of roses ('Red Intuition' (red), 'Citran' (yellow), 'Vendela' (white) were used in this study. The duration of simulated transportation was reduced from 14 to 9 days and the duration of shop display was increased from 2 to 3 days.

Besides the vase life of the flowers the expert panel also scored visual leaf quality after 12 days on the vase (1 = poor, 5 = good). The BA concentration in the flower heads was not analyzed in this study.

The results are shown in Table 6.

**Table 6**

| | BA added | Vase life (days) | Leaf quality |
|---|---|---|---|
| Set A | Yes | | 3.0 |
| • *Red Intuition* | | 9.6 | |
| • *Citran* | | 12.5 | |
| • *Vendela* | | 13.0 | |
| Control | No | | 1.0 |
| • *Red Intuition* | | 5.0 | |
| • *Citran* | | 13.0 | |
| • *Vendela* | | 12.5 | |

### Example 4

Example 3 was repeated, except that this time the following three different types of roses were used in the study:
- 'Freedom' (red)
- 'Bonanza' (peach)
- 'Sandra' (pink)

The results are shown in Table 7.

**Table 7**

| | BA added | Vase life (days) | Leaf quality |
|---|---|---|---|
| Set A | Yes | | 4.0 |
| • *Freedom* | | 18.8 | |
| • *Bonanza* | | 14.5 | |
| • *Sandra* | | 17.6 | |
| Control | No | | 3.0 |
| • *Freedom* | | 15.3 | |
| • *Bonanza* | | 15.8 | |
| • *Sandra* | | 14.0 | |

### Example 5

### Procedure

Three different types of cut red roses were used in this study, namely 'Hot Blood', 'Rhodos' and 'Incredible'. For each type flowers were randomly divided into four different sets.

One set of flowers (set A) was subjected to a preservation treatment that involved dipping of the flower heads into an aqueous solution of 80 ppm 6-benzylaminopurine (BA) in tap water for 3 seconds.

Immediately after the preservation treatment of set A, each set of flowers was bunched and sleeved (10 flowers per sleeved bunch) after the ends of the flower stems had been cut off, and in total 20 flowers of each set were kept for 4 hours at 20°C under dark conditions in buckets (60 stems per bucket) with the flower stems immersed in 2 liters of water containing 1 ml/l of a flower pre-treatment product (Chrysal® Grow 20).

Following this pre-treatment, the sleeved flower bunches of set A were removed from the buckets and packaged without any external water supply in a carton box (l x b x h = 1.0 x 0.4 x 0.2 m). The carton box contained 6 sleeved flower bunches.

One of the other three sets of non-dipped flowers(Control) was packaged in the same way, i.e. in carton boxes without external water supply.

The remaining two sets of non-dipped flowers (sets B and C) were introduced into buckets (20 stems per bucket) that each contained 2 liters of water. The bucket water of set B contained 7 ppm BA. The bucket water of set C contained 7 ppm BA as well as 5 ml/l of Chrysal® Clear Professional 2 (CCP2). This product is based on sugars and acidifier, while biocides are present to protect these active ingredients against bacterial attack.

The four sets of roses were kept at 2°C under dark conditions for 24 hours, following which each set was transferred into buckets (60 stems per bucket) that contained 2 liters of water to which 5 ml/l Chrysal® Clear Professional 2 had been added. Before introducing the cut flowers into the buckets, the ends of the flower stems were cut off. The buckets holding the sleeved cut flowers were kept for 4 days under dark, refrigerated (2°C) conditions, and subsequently for 2 days at 20°C under daylight conditions (12 hours 1000 lux and 12 hours dark).

Next, for each of the three different type of cut red roses the two bunches of 10 cut flowers from each of the sets were introduced in vases, each holding 1 liter of water to which 10 g/l Chrysal® Clear had previously been added. Before introducing the cut flowers into the vases, the ends of the flower stems were cut off. The vases holding the flowers were kept at 20°C under daylight conditions (12 hours 1000 lux and 12 hours dark).

The quality of the cut flowers was assessed at regular intervals by an expert panel and from these assessments the average vase life was determined for the cut flowers of each of the 4 sets.

The results obtained from these experiments are summarized in Table 8

**Table 8**

| | | Vase life (days) |
|---|---|---|
| 'Hot Blood' | Control | 10.7 *a* |
| | A (dipped in BA, dry) | 16.2 *b* |
| | B (wet + BA) | 11.2 *a* |
| | C (wet + BA + CCP2) | 12.0 *a* |
| 'Rhodos' | Control | 8.8 *a* |
| | A (dipped in BA, dry) | 13.9 *b* |
| | B (wet + BA) | 9.4 *a* |
| | C (wet + BA + CCP2) | 8.7 *a* |
| 'Incredible' | Control | 11.4 *a* |
| | A (dipped in BA, dry) | 17.2 *b* |
| | B (wet + BA) | 11.1 *a* |
| | C (wet + BA + CCP2) | 11.8 *a* |

The letters behind the numerical scores in Table 8 indicate to which extent the difference between the 4 scores for a given set of cut flowers are statistically significant (at a P-value of 0.05). Scores that are followed by the same latter are not statistically significant.

Table 8 shows that for each of the rose types the dipped set had a significantly longer vase life than the non-dipped sets.

### Example 6

Example 5 was repeated, except that this time the sets of cut flowers were kept under refrigerated and dark conditions for 8 days instead of 24 hours.

The results of these experiments are shown in Table 9

**Table 9**

| | | Vase life (days) |
|---|---|---|
| 'Hot Blood' | Control | 9.9 *ab* |
| | A (dipped in BA, dry) | 11.8 *b* |
| | B (wet + BA) | 7.3 *a* |
| | C (wet + BA + CCP2) | 8.9 *ab* |
| 'Rhodos' | Control | 9.9 *a* |
| | A (dipped in BA, dry) | 13.5 *b* |
| | B (wet + BA) | 8.2 *a* |
| | C (wet + BA + CCP2) | 8.5 *a* |
| 'Incredible' | Control | 12.1 *a* |
| | A (dipped in BA, dry) | 14.8 *b* |
| | B (wet + BA) | 10.4 *a* |
| | C (wet + BA + CCP2) | 11.2 *a* |

Table 9 shows that for two of the rose types the dipped set had a significantly longer vase life than the non-dipped sets. For rose type 'Hot Blood' the average vase life of the dipped set was higher than that of the non-dipped sets, but the difference with the control set and set C was not statistically significant at a P-value of 0.05.

## Claims

1. A flower shipment kit, comprising:
(a) an outer container defining an inner chamber; and
(b) one or more cut roses contained within said inner chamber;
wherein flower buds or bloomed flowers of the one or more cut roses contain added plant hormone, said added plant hormone being selected from cytokinins, gibberellins and combinations thereof; and wherein stems of the cut roses are not immersed or inserted into a hydration system.

2. The flower shipment kit according to claim 1, wherein the buds or flowers of the one or more cut roses contain at least 0.5 ppm of the plant hormone.

3. The flower shipment kit according to any one of the preceding claims, wherein the plant hormone is a cytokinin.

4. The flower shipment kit according to claim 3, wherein the cytokinin is an adenine-type cytokinin.

5. The flower shipment kit according to claim 4, wherein the adenine-type cytokinin is 6-benzyladenine.

6. The flower shipment kit according to claim 3, wherein the cytokinin is thidiazuron.

7. The flower shipment kit according to any one of the preceding claims, wherein the container is a box.

8. The flower shipment kit according to any one of the preceding claims, wherein the added plant hormone in the flower buds or bloomed flowers of the one or more cut roses is at least twice as high as the concentration of the added plant hormone in the stems of the one or more cut roses.

9. The flower shipment kit according to any one of the preceding claims, wherein the inner chamber of the outer container holds at least 10 cut roses.

10. A method of preserving cut roses during transportation or storage, said method comprising:
• cutting roses to produce one or more cut roses comprising a flower bud or a bloomed flower; and
• packaging one or more of the cut roses in a container without immersing or inserting the stems in a hydration system;
wherein the cut roses are treated before or during the packaging by applying a preservation composition onto the flower buds or bloomed flowers of these cut roses, said preservation composition containing at least 5 ppm of plant hormone selected from cytokinin, gibberellins and combinations thereof.

11. The method according to claim 10, wherein the roses are still in the bud stage when they are treated with the preservation composition.

12. The method according to claim 10 or 11, wherein the preservation composition is applied onto the flower buds or bloomed flowers after the roses have been cut.

13. The method according to any one of claims 10-12, wherein the preservation composition is applied onto the flower buds or the bloomed flowers by spraying or by dipping.

14. Method according to any one of claims 10-13,wherein, following packaging, the treated roses are kept in the container for at least 1 day under refrigeration conditions and without water supply.

## Patentansprüche

1. Blumenversandkit, umfassend:
(a) einen äußeren Behälter, der eine innere Kammer definiert; und
(b) eine oder mehrere Schnittrosen, die innerhalb der inneren Kammer enthalten sind;
wobei Blütenknospen oder erblühte Blüten der einen oder mehreren Schnittrosen zugefügtes Pflanzenhormon enthalten, wobei das zugefügte Pflanzenhormon aus Cytokininen, Gibberellinen und Kombinationen derselben ausgewählt ist; und wobei Stiele der Schnittrosen nicht in ein Flüssigkeitszufuhrsystem eingetaucht oder eingesetzt sind.

2. Blumenversandkit nach Anspruch 1, wobei die Knospen oder Blüten der einen oder mehreren Schnittrosen wenigstens 0,5 ppm des Pflanzenhormons enthalten.

3. Blumenversandkit nach einem der vorangehenden Ansprüche, wobei das Pflanzenhormon Cytokinin ist.

4. Blumenversandkit nach Anspruch 3, wobei das Cytokinin ein Adenin-artiges Cytokinin ist.

5. Blumenversandkit nach Anspruch 4, wobei das Adenin-artige Cytokinin 6-Benzyladenin ist.

6. Blumenversandkit nach Anspruch 3, wobei das Cytokinin Thidiazuron ist.

7. Blumenversandkit nach einem der vorangehenden Ansprüche, wobei der Behälter eine Schachtel ist.

8. Blumenversandkit nach einem der vorangehenden Ansprüche, wobei das zugefügte Pflanzenhormon in den Blütenknospen oder erblühten Blüten der einen oder mehreren Schnittrosen wenigstens doppelt so hoch ist wie die Konzentration des zugefügten Pflanzenhormons in den Stielen der einen oder mehreren Schnittrosen.

9. Blumenversandkit nach einem der vorangehenden Ansprüche, wobei die innere Kammer des äußeren Behälters wenigstens 10 Schnittrosen hält.

10. Verfahren zum Bewahren von Schnittrosen während Transport oder Lagerung, wobei das Verfahren umfasst:
• Schneiden von Rosen, um eine oder mehrere Schnittrosen, umfassend eine Blütenknospe oder eine erblühte Blüte, herzustellen; und
• Verpacken einer oder mehrerer der Schnittrosen in einem Behälter ohne Eintauchen oder Einsetzen der Stiele in ein Wasserzufuhrsystem;
wobei die Schnittrosen vor oder während des Verpackens durch Beaufschlagen einer Bewahrungszusammensetzung auf die Blütenknospen oder erblühten Blüten dieser Schnittrosen behandelt werden, wobei die Bewahrungszusammensetzung wenigstens 5 ppm eines Pflanzenhormons ausgewählt aus Cytokinin, Gibberellinen und Kombinationen derselben enthält.

11. Verfahren nach Anspruch 10, wobei die Rosen in der Knospenstufe sind, wenn sie mit der Bewahrungszusammensetzung behandelt werden.

12. Verfahren nach Anspruch 10 oder 11, wobei die Bewahrungszusammensetzung auf die Blütenknospen oder erblühten Blüten aufgetragen wird, nachdem die Rosen geschnitten worden sind.

13. Verfahren nach einem der Ansprüche 10 - 12, wobei die Bewahrungszusammensetzung auf die Blütenknospen oder die erblühten Blüten durch Sprühen oder durch Eintauchen aufgetragen wird.

14. Verfahren nach einem der Ansprüche 10 - 13, wobei, folgend dem Verpacken, die behandelten Rosen in dem Behälter für wenigstens einen Tag unter gekühlten Bedingungen und ohne Wasserversorgung gehalten werden.

## Revendications

1. Un kit d'expédition de fleurs comprenant :
a) un contenant externe définissant une chambre interne; et
b) une ou plusieurs roses coupées contenues dans ladite chambre interne;
- kit dans lequel les bourgeons floraux ou les fleurs épanouies d'une ou plusieurs des roses coupées contiennent une hormone végétale ajoutée, ladite hormone végétale ajoutée étant choisie parmi les cytokinines, les gibbérellines et leurs combinaisons; et
- dans lequel les tiges des roses coupées ne sont pas immergées ou insérées dans un système d'hydratation.

2. Le kit d'expédition de fleurs selon la revendication 1, dans lequel les bourgeons ou les fleurs d'une ou plusieurs des roses coupées contiennent au moins 0,5 ppm de l'hormone végétale.

3. Le kit d'expédition de fleurs selon l'une quelconque des revendications précédentes, dans lequel l'hormone végétale est une cytokinine .

4. Le kit d'expédition de fleurs selon la revendication 3, dans lequel la cytokinine est une cytokinine de type adénine.

5. Le kit d'expédition de fleurs selon la revendication 4, dans lequel la cytokinine de type adénine est la 6-benzyladénine.

6. Le kit d'expédition de fleurs selon la revendication 3, dans lequel la cytokinine est le thidiazurone.

7. Le kit d'expédition de fleurs selon l'une quelconque des revendications précédentes, dans lequel le conteneur est une boîte.

8. Le kit d'expédition de fleurs selon l'une quelconque des revendications précédentes, dans lequel la concentration de l'hormone végétale ajoutée dans les bourgeons floraux ou les fleurs épanouies d'une ou plusieurs des roses coupées est au moins deux fois plus élevée que la concentration de l'hormone végétale ajoutée dans les tiges d'une ou plusieurs des roses coupées.

9. Le kit d'expédition de fleurs selon l'une quelconque des revendications précédentes, dans lequel la chambre intérieure du conteneur externe contient au moins 10 roses coupées.

10. Un procédé de conservation de roses coupées pendant le transport ou le stockage, ledit procédé consistant à:
• couper des roses pour produire une ou plusieurs roses coupées comprenant un bourgeon floral ou une fleur épanouie; et
• emballer une ou plusieurs roses coupées dans un contenant sans immerger ou insérer les tiges dans un système d'hydratation;
procédé dans lequel les roses coupées sont traitées avant ou pendant l'emballage par application d'une composition de conservation sur les bourgeons floraux ou les fleurs épanouies de ces roses coupées, ladite composition de conservation contenant au moins 5 ppm d'hormone végétale choisie parmi la cytokinine, les gibbérellines et leurs combinaisons.

11. Procédé selon la revendication 10, dans lequel les roses sont toujours au stade de bourgeon lorsqu'elles sont traitées avec la composition de conservation.

12. Procédé selon la revendication 10 ou 11, dans lequel la composition de conservation est appliquée sur les bourgeons floraux ou les fleurs épanouies après que les roses ont été coupées.

13. Procédé selon l'une quelconque des revendications 10 à 12, dans lequel la composition de conservation est appliquée sur les bourgeons floraux ou les fleurs épanouies par pulvérisation ou par trempage.

14. Procédé selon l'une quelconque des revendications 10 à 13, dans lequel, après conditionnement, les roses traitées sont conservées dans le récipient pendant au moins 1 jour dans des conditions de réfrigération et sans apport d'eau.
